(19) **Europäisches Patentamt**
**European Patent Office**
**Office européen des brevets**

(11) **EP 3 358 743 B1**

(12) **EUROPEAN PATENT SPECIFICATION**

(45) Date of publication and mention
of the grant of the patent:
**07.10.2020   Bulletin 2020/41**

(51) Int Cl.:
***H02P 27/06*** *(2006.01)*

(21) Application number: **16850826.5**

(22) Date of filing: **19.07.2016**

(86) International application number:
**PCT/JP2016/071164**

(87) International publication number:
**WO 2017/056649 (06.04.2017 Gazette 2017/14)**

(54) **POWER CONVERSION DEVICE AND AUTO-TUNING METHOD THEREFOR**

STROMUMWANDLUNGSVORRICHTUNG UND AUTOMATISCHES EINSTELLVERFAHREN DAFÜR

DISPOSITIF DE CONVERSION DE PUISSANCE ET SON PROCÉDÉ D'AUTO-SYNTONISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.09.2015   JP 2015194622**

(43) Date of publication of application:
**08.08.2018   Bulletin 2018/32**

(73) Proprietor: **Hitachi Industrial Equipment Systems Co., Ltd.**
**Tokyo 101-0022 (JP)**

(72) Inventors:
• **TOBARI Kazuaki**
  **Tokyo 100-8280 (JP)**
• **IBORI Satoshi**
  **Tokyo 101-0022 (JP)**
• **TOMITA Hiroyuki**
  **Tokyo 101-0022 (JP)**
• **NAKAMURA Atsuhiko**
  **Tokyo 101-0022 (JP)**

• **ONUMA Yusaku**
  **Tokyo 101-0022 (JP)**
• **SUGIMOTO Takuya**
  **Tokyo 101-0022 (JP)**
• **IWAJI Yoshitaka**
  **Tokyo 100-8280 (JP)**
• **KAMIYA Akinori**
  **Tokyo 100-8280 (JP)**

(74) Representative: **Mewburn Ellis LLP**
**Aurora Building**
**Counterslip**
**Bristol BS1 6BX (GB)**

(56) References cited:
**CN-A- 102 393 507**      **JP-A- H11 151 000**
**JP-A- S55 122 484**      **JP-A- 2004 173 496**
**JP-A- 2013 138 548**      **JP-A- 2013 138 604**
**KR-A- 20040 087 160**      **US-A1- 2012 098 477**
**US-A1- 2012 098 477**

EP 3 358 743 B1

**Description**

Technical Field

The present invention relates to a power conversion apparatus that drives an induction motor and a method of automatically tuning the power conversion apparatus.

Background Art

In an induction motor for a certain application, it is required to output high torque in a low speed range such as, for example, 5 Hz or less, and in order to solve a torque shortage in a low speed range, an excitation current is increased. However, since increasing the excitation current generates magnetic flux saturation, it is difficult to set a numerical value that represents appropriate motor characteristics in vector control. For this reason, it is necessary to set an appropriate magnetic flux command in consideration of magnetic flux saturation in the power conversion apparatus that drives the induction motor.

PTL 1 describes techniques such as a technique capable of measuring an excitation current equivalent to an excitation current in an equivalent no-load test, even under a load condition in an equivalent no-load test method of an induction machine, and a control technique that limits a voltage boost amount using torque measurement when overcurrent limitation is applied or using this torque. PTL 1 describes "an equivalent no-load test method of an induction machine in a case where there are known a primary resistance and an equivalent leakage inductance of the induction machine of a system that uses an inverter to start the induction machine, the equivalent no-load test method comprising a function of separating an excitation current component from a primary current vector, the primary resistance, and the equivalent leakage inductance of the induction machine, by an estimation calculation based on a circle diagram method, the function being capable of separating an excitation current component even at the time of a load." (claim 1).

JPS55122484A discloses a sine-wave inverter in which a command signal and a speed signal for an induction motor are input to a V/f converter, and the output pulses are supplied to a sine-wave generator via a frequency divider, by which an artificial sine wave is output. In addition, the output of a triangular-wave generator is compared with the sine wave in a comparator and given to a pulse-width modulator to control transistors, and thereby the rpm of a motor is controlled.

US2012/098477A1 discloses methods and devices for estimating induction motor inductance parameters based on instantaneous reactive power. The induction motor inductance parameters, e.g., the stator inductance and the total leakage factor, can be estimated from motor nameplate data and instantaneous reactive power without involving speed sensors or electronic injection circuits. In one example, the method includes: measuring voltages and currents; converting the measured voltages and currents into discrete-time voltage and current samples by analog-to-digital converters; synthesizing a complex voltage from the discrete-time voltage samples; synthesizing a complex current from the discrete-time current samples; acquiring and storing motor nameplate data; detecting instantaneous rotor speed by calculating an instantaneous rotor slot harmonic frequency with respect to an instantaneous fundamental frequency; calculating, via an induction motor inductance estimator, the motor's instantaneous reactive power and other intermediate quantities; and outputting the stator inductance and the total leakage factor.

KR20040087160A discloses an apparatus for measuring mutual inductance of an induction motor that comprises a 2 to 3 phase voltage converter for converting d and q axes of 2 phase to a 3 phase voltage and outputting it; an inverter for receiving the output voltage of the 2 to 3 phase converter and applying a constant 3 phase voltage to the induction motor; a current sensor for sensing a 3 phase current flowing to the induction motor; a 3 to 2 current converter for converting the detected 3 phase current to a 2 phase current of the d and q axes and outputting it; and a mutual inductance measurer for measuring a mutual inductance by calculating a reactive power and a parameter of the induction motor.

Citation List

Patent Literature

PTL 1: JP H10-285999 A

Summary of Invention

Technical Problem

It is an object of the present invention to provide a power conversion apparatus that achieves automatic tuning of a mutual inductance M in consideration of magnetic saturation and an automatic setting relating to a command value of an excitation current and stably achieves high torque even in an extremely low speed range by vector control operation.

Solution to Problem

According to a first aspect of the present invention there is provided a method of automatically tuning a power conversion apparatus that drives an induction motor as specified in claim 1.
The method according to the first aspect of the present invention may optionally be as specified in claim 2.
According to a second aspect of the present invention there is provided a power conversion apparatus as specified in claim 3.
The power conversion apparatus according to the second aspect of the present invention may optionally be as specified in any one of claims 4 to 7.

Advantageous Effects of Invention

According to the present invention, it is possible to achieve automatic tuning of the mutual inductance M in consideration of magnetic saturation and an automatic setting relating to the command value of the excitation current.
Furthermore, by setting these constants automatically for a vector control system, it is possible to provide the power conversion apparatus that stably achieves high torque even in an extremely low speed range.

Brief Description of Drawings

[FIG. 1] FIG. 1 is a configuration diagram of a power conversion apparatus according to a first embodiment of the present invention.
[FIG. 2] FIG. 2 is a configuration diagram of a mutual inductance calculation unit according to the first embodiment.
[FIG. 3] FIG. 3 is a configuration diagram of a power conversion apparatus according to a second embodiment of the present invention.
[FIG. 4] FIG. 4 is a configuration diagram of a V/f control unit according to the second embodiment.
[FIG. 5] FIG. 5 is a graph illustrating output signal characteristics of the V/f control unit according to the second embodiment.
[FIG. 6] FIG. 6 is graphs illustrating characteristics of a voltage command value and a current detection value according to the second embodiment.
[FIG. 7] FIG. 7 is a graph illustrating characteristics of a detection value of an excitation current and a mutual inductance according to the second embodiment.
[FIG. 8] FIG. 8 is a configuration diagram of a power conversion apparatus according to a third embodiment of the present invention.
[FIG. 9] FIG. 9 is graphs illustrating load operating characteristics in a case where a conventional technique is used.
[FIG. 10] FIG. 10 is a configuration diagram of a d-axis current/magnetic flux command setting unit according to the third embodiment.
[FIG. 11] FIG. 11 is graphs illustrating load operating characteristics in a case the third embodiment is used.
[FIG. 12] FIG. 12 is a configuration diagram of a d-axis current/magnetic flux command setting unit according to a fourth embodiment of the present invention.
[FIG. 13] FIG. 13 is a configuration diagram of a power conversion apparatus according to a fifth embodiment of the present invention.
[FIG. 14] FIG. 14 is a configuration diagram of a power conversion apparatus according to a modified example of the fifth embodiment.
[FIG. 15] FIG. 15 is a configuration diagram of a power conversion apparatus according to a sixth embodiment of the present invention.
[FIG. 16] FIG. 16 is a configuration diagram of a power conversion apparatus according to a seventh embodiment of the present invention.

Description of Embodiments

Embodiments of the present invention will be hereinafter described in detail with reference to the drawings. Note that the same reference numerals will be assigned to configurations common among the drawings, and repeated description will be omitted. Furthermore, each embodiment described below is not limited to the illustrated examples.

[First embodiment]

The first embodiment relates to measurement of a mutual inductance M in consideration of magnetic saturation by V/f control.

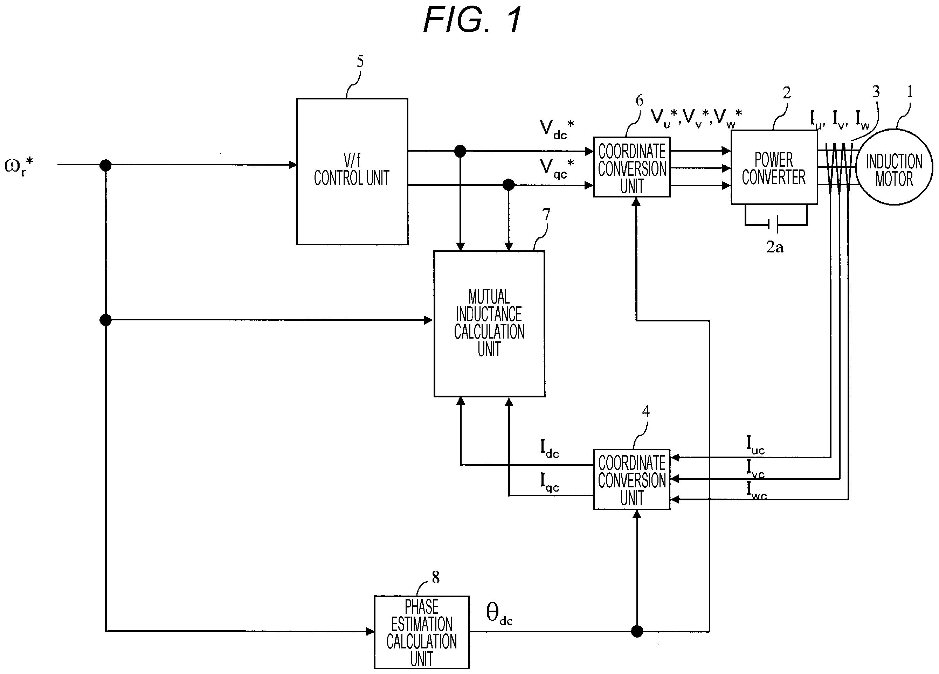

FIG. 1 illustrates a configuration diagram of a power conversion apparatus according to the first embodiment of the present invention.

An induction motor 1 generates torque by magnetic flux generated by a current of a magnetic flux axis (d-axis) component and a current of a torque axis (q-axis) component orthogonal to the magnetic flux axis.

A power converter 2 outputs a voltage value proportional to voltage command values $V_u{}^*$, $V_v{}^*$, and $V_w{}^*$ of a three-phase alternating current and varies an output voltage value and a rotational frequency value of the induction motor 1.

A direct current power supply 2a supplies a direct current voltage to the power converter 2.

A current detector 3 outputs detected values $I_{uc}$, $I_{vc}$, and $I_{wc}$ of three-phase alternating currents $I_u$, $I_v$, and $I_w$ of the induction motor 1. The current detector 3 detects line currents of two phases of the induction motor 1 among the three phases thereof, for example, a U-phase current and a W-phase current, and the line current of the V-phase may be obtained as $I_v = - (I_u + I_w)$ from an alternating current condition $(I_u + I_v + I_w = 0)$ .

A coordinate conversion unit 4 outputs a d-axis current detection value $I_{dc}$, and a q-axis current detection value $I_{qc}$ of the rotational coordinate axes from the detected values $I_{uc}$, $I_{vc}$, and $I_{wc}$ of the three-phase alternating currents $I_u$, $I_v$, and $I_w$ and a phase estimated value $\theta_{dc}$.

A V/f control unit 5 outputs a d-axis voltage command value $V_{dc}{}^*$ and a q-axis voltage command value $V_{qc}{}^*$ on the basis of a speed command value $\omega_r{}^*$ and the ratio of the output voltage of the induction motor 1 to the output frequency of the induction motor 1 (V/f).

A coordinate conversion unit 6 outputs the voltage command values $V_u{}^*$, $V_v{}^*$, and $V_w{}^*$ of the three-phase alternating current on the fixed coordinate axes from the voltage command values $V_{dc}{}^*$ and $V_{qc}{}^*$ and the phase estimated value $\theta_{dc}$.

A mutual inductance calculation unit 7 calculates a mutual inductance $M^\wedge$ of the induction motor 1 on the basis of the d-axis voltage command value $V_{dc}{}^*$ and the q-axis voltage command value $V_{qc}{}^*$, the d-axis current detection value $I_{dc}$, the q-axis current detection value $I_{qc}$, the speed command value $\omega_r{}^*$, and a leakage inductance $L_\sigma$ of the induction motor 1.

A phase estimation calculation unit 8 integrates the speed command value $\omega_r{}^*$ and outputs the phase estimated value $\theta_{dc}$.

First, the basic operation of the mutual inductance calculation unit 7 that is a feature of the present embodiment will be described.

A V/f control unit 5 multiplies the speed command value $\omega_r{}^*$ given from a host device by the ratio of the output voltage of the induction motor 1 to the output frequency of the induction motor 1 (V/f_gain) and calculates a q-axis voltage command value $V_{qc}{}^*$ by a calculation illustrated in (Equation 1). In the present embodiment, the d-axis voltage command value is set to zero.

[Equation 1]

$$\begin{bmatrix} V_{dc}{}^* = 0 \\ V_{qc}{}^* = \omega_r{}^* \cdot V/f\_gain \end{bmatrix} \quad \cdot\cdot\cdot \ (1)$$

Herein, a drop voltage by a primary resistance $R_1$ of the induction motor 1 is not compensated. However, in some cases, there may be performed a boost operation that gives the above-described voltage drop as a voltage bias to the voltage command values $V_{dc}{}^*$ and $V_{qc}{}^*$. In particular, this is effective in a case where load torque is applied from the time of startup.

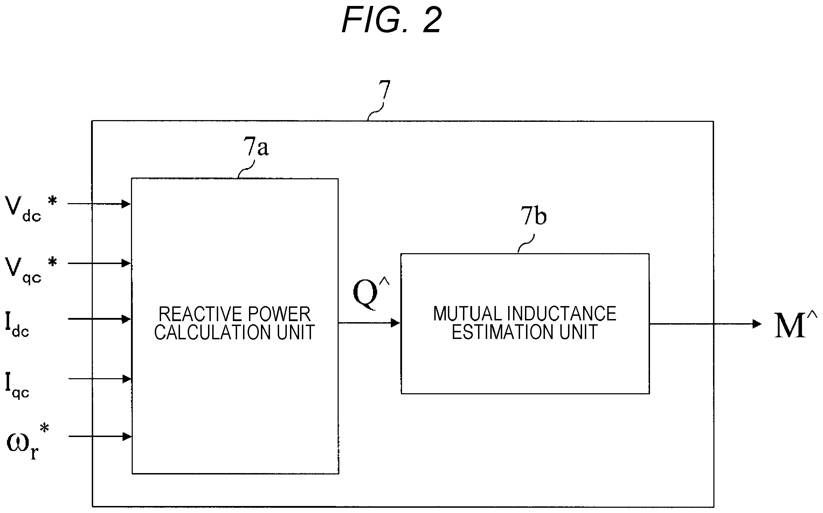

FIG. 2 illustrates a configuration of the mutual inductance calculation unit 7 that is a feature of the present invention.

The mutual inductance calculation unit 7 includes a reactive power calculation unit 7a and a mutual inductance estimation unit 7b.

The reactive power calculation unit 7a calculates reactive power $Q^\wedge$ of the induction motor 1 according to (Equation 2) using the d-axis voltage command value $V_{dc}{}^*$, the q-axis voltage command value $V_{qc}{}^*$, the d-axis current detection value $I_{dc}$, and the q-axis current detection value $I_{qc}$.

[Equation 2]

$$Q\hat{} = V_{dc}{}^* \cdot I_{qc} - V_{qc}{}^* \cdot I_{dc} \quad \cdots \quad (2)$$

Herein, the reactive power $Q^\wedge$ will be described.

The voltage equation of the induction motor 1 is expressed by (Equation 3).

[Equation 3]

$$\begin{bmatrix} V_d = R_1 \cdot I_d - \omega_1 \cdot L_\sigma \cdot I_q - \omega_1 \cdot \dfrac{M}{L_2} \cdot \phi_{2q} \\[2mm] V_q = R_1 \cdot I_q + \omega_1 \cdot L_\sigma \cdot I_d + \omega_1 \cdot \dfrac{M}{L_2} \cdot \phi_{2d} \end{bmatrix} \qquad \cdots \quad (3)$$

Here, $L_\sigma$ represents a leakage inductance, M represents a mutual inductance, L2 represents a secondary side inductance, $\omega_1$ represents a primary angular frequency command, $\varphi_{2d}$ represents a d-axis secondary magnetic flux, and $\varphi_{2q}$ represents a q-axis secondary flux.

By substituting (Equation 3) into (Equation 2) and setting $I_d = I_{dc}$, $I_q = I_{qc}$, and $\omega_1 = \omega_r{}^*$, the reactive power $Q^\wedge$ can be expressed by (Equation 4).

[Equation 4]

$$Q^{\wedge} = \left( R_1 \cdot I_{dc} - \omega_r{}^* \cdot L_\sigma \cdot I_{qc} - \omega_r{}^* \cdot \frac{M}{L_2} \cdot \phi_{2q} \right) \cdot I_{qc} - \left( R_1 \cdot I_{qc} + \omega_r{}^* \cdot L_\sigma \cdot I_{dc} + \omega_r{}^* \cdot \frac{M}{L_2} \cdot \phi_{2d} \right) \cdot I_{dc}$$

$$\cdots (4)$$

Next, using the reactive power $Q^\wedge$ illustrated in (Equation 4), the mutual inductance estimation unit 7b solves a quadratic equation for the mutual inductance estimated value $M^\wedge$ by calculation of (Equation 5).

[Equation 5]

$$\omega_r{}^* \cdot I_{dc}{}^2 \cdot M^{\wedge 2} - \left( \left| Q_c + \omega_r{}^* \cdot L_\sigma{}^{\wedge} \cdot I_{1c}{}^2 \right| + \omega_r{}^* \cdot L_\sigma{}^{\wedge} \cdot I_{qc}{}^2 \right) M^{\wedge} - \frac{L_\sigma{}^{\wedge}}{2} \left| Q_c + \omega_r{}^* \cdot L_\sigma{}^{\wedge} \cdot I_{1c}{}^2 \right| = 0 \quad \cdots \quad (5)$$

The above is the basic operation of the mutual inductance calculation unit.

According to the present embodiment, by using the reactive power as described above, it is possible to estimate the mutual inductance M with high accuracy regardless of a no-load state or a loaded state.

[Second embodiment]

The second embodiment relates to creation of a table of a mutual inductance and an excitation current.

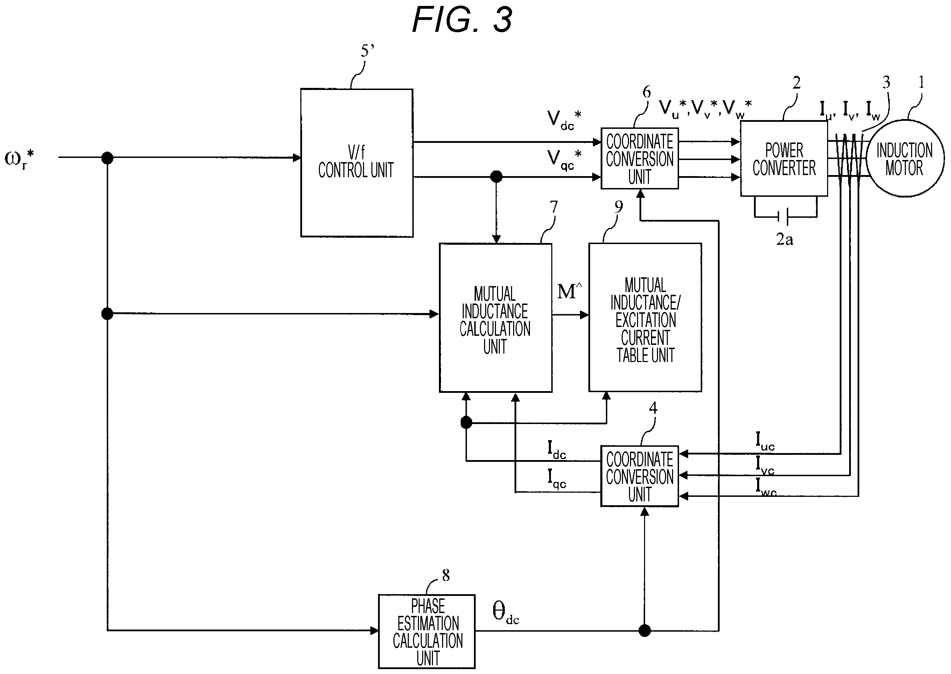

FIG. 3 is a configuration diagram of a power conversion apparatus according to the second embodiment of the present invention.

In the first embodiment, a ratio of an output voltage to an output frequency (hereinafter referred to as V/f ratio) of the V/f control unit is set to a fixed value. However, in the present embodiment, the V/f ratio is changed in several stages.

In the figure, reference numerals 1 to 4 and 6 to 8 are the same as those in FIG. 1.

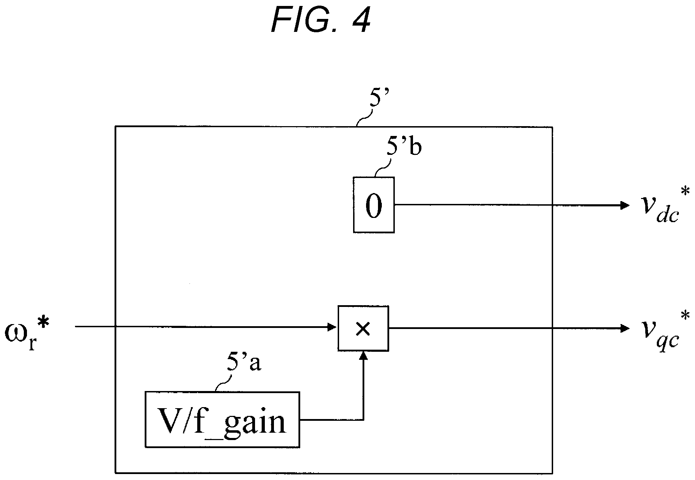

FIG. 4 is a configuration diagram of a V/f control unit 5'.

The V/f control unit 5' sets the V/f ratio (V/f_gain) that changes in several stages to a variable 5'a and multiplies the V/f ratio by the speed command value $\omega_r{}^*$ to output the q-axis voltage command value $V_{qc}{}^*$. Furthermore, zero that is set to a constant 5'b is output to the d-axis voltage command value $V_{dc}{}^*$.

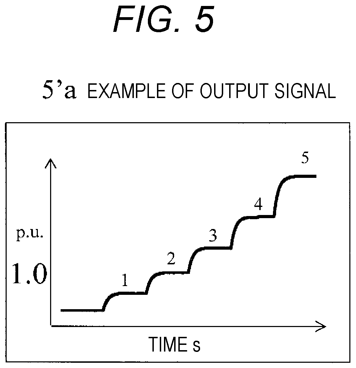

FIG. 5 illustrates an example of an output signal of the variable 5'a. Herein, an example in which the output signal of the variable 5'a is changed in five stages is illustrated.

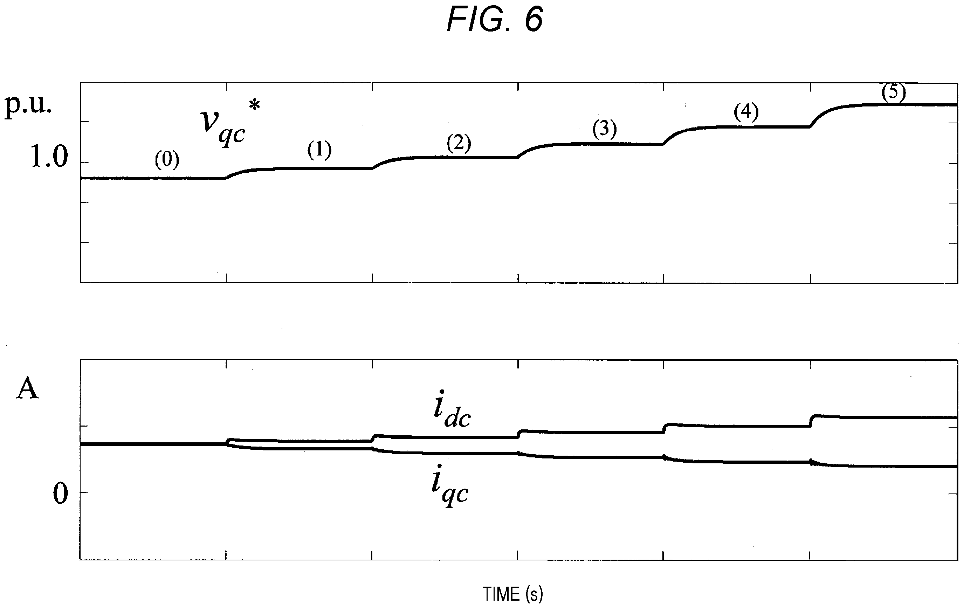

FIG. 6 illustrates characteristics of the voltage command value and the current detection value in a case where the V/f ratio is changed in five stages (50% loaded state). It can be seen that when the V/f ratio is increased with the speed command value $\omega_r{}^*$ being a constant value, a d-axis current detection value $I_{dc}$ also increases.

By changing the q-axis voltage command value $V_{qc}{}^*$, the d-axis current detection value $I_{dc}$ can also be changed indirectly.

Herein, the q-axis current detection value $I_{qc}$ decreases. This is because the d-axis secondary magnetic flux $\varphi_{2d}$ also increases as a d-axis current $I_d$ increases.

That is, since the torque is constant, the q-axis current detection value $I_{qc}$ decreases as the d-axis secondary magnetic flux $\varphi_{2d}$ increases.

In a mutual inductance calculation unit 7, the q-axis voltage command value $V_{qc}^*$ that has changed in several stages (five stages in the present embodiment), the d-axis current detection value $I_{dc}$, and the q-axis current detection value $I_{qc}$ are input.

Herein, using these signals, a mutual inductance estimated value $M^{\wedge}$ that changes in several stages is calculated.

Next, in a mutual inductance/excitation current table unit 9, the mutual inductance estimated value $M^{\wedge}$ that has changed in several stages and the d-axis current detection value $I_{dc}$ used for calculation at that time are input, and a table relating to the mutual inductance and the excitation current (d-axis current detection value) is created.

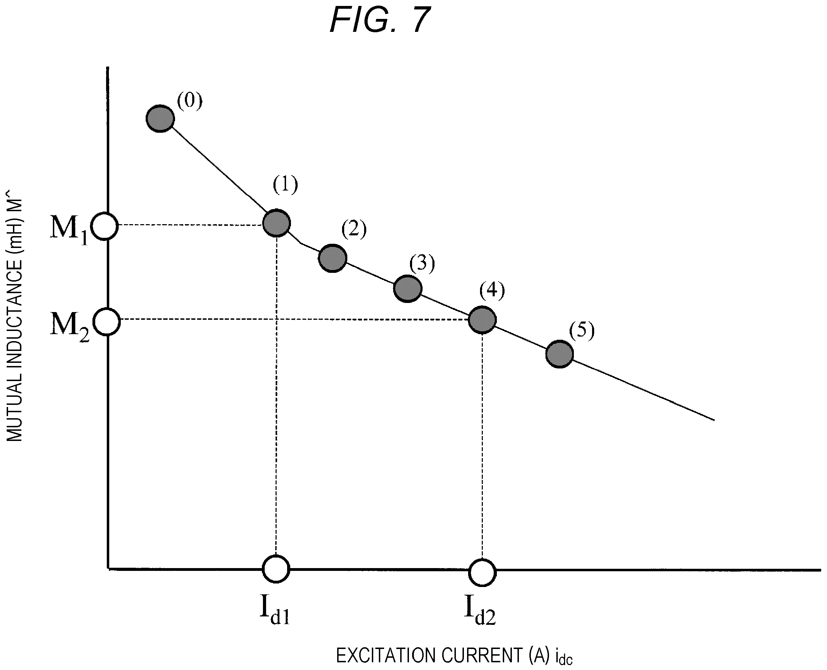

FIG. 7 illustrates an example of the table relating to the mutual inductance and the excitation current.

The excitation current (d-axis current detection value $i_{dc}$) is illustrated on the horizontal axis and the mutual inductance value (estimated value $M^{\wedge}$) is illustrated on the vertical axis. As combinations of the mutual inductance and the excitation current, there are $(M_1, I_{d1})$, $(M_2, I_{d2})$, and the like.

Note that in place of the table, a formula expressing an approximate relationship between the mutual inductance and the excitation current may be created.

According to the present embodiment, by adopting such a configuration, it is possible to acquire nonlinear characteristics relating to the mutual inductance and the excitation current.

[Third embodiment]

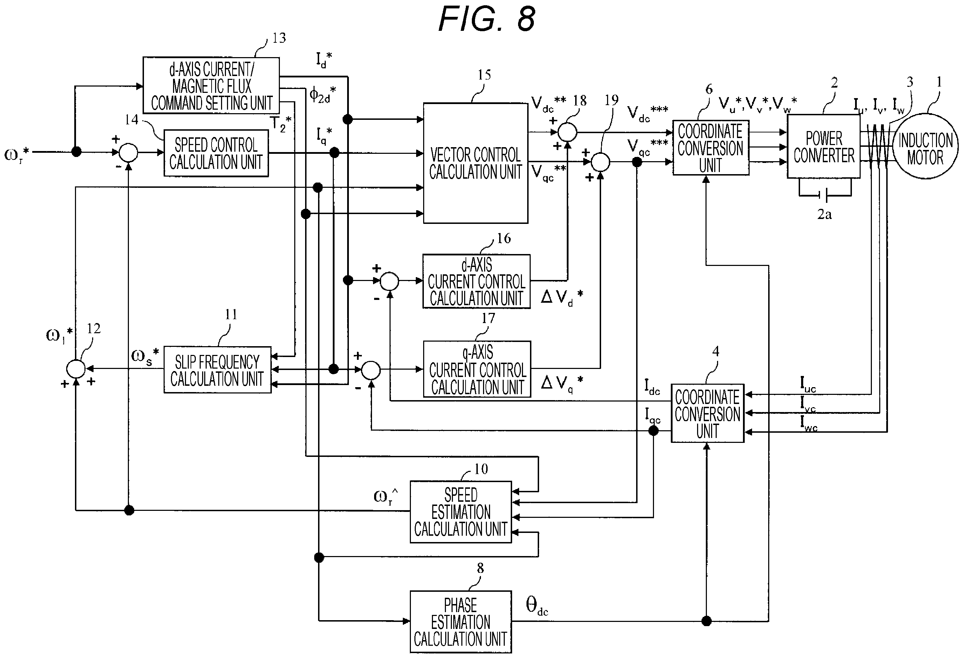

FIG. 8 is a configuration diagram of a power conversion apparatus according to the third embodiment of the present invention.

The first embodiment relates to the estimation of the mutual inductance M, and the second embodiment relates to the creation of the mutual inductance M and the excitation current table. The third embodiment is obtained by applying the table created in the second embodiment to a power conversion apparatus controlled by speed sensorless vector control.

In FIG. 8, reference numerals 1 to 4, 6, and 8 are the same as those in FIG. 1.

A speed estimation calculation unit 10 outputs a speed estimated value $\omega_r^{\wedge}$ of an induction motor 1 on the basis of a q-axis voltage command value $V_{qc}^{***}$, a q-axis current detection value $I_{qc}$, an output frequency value $\omega_1^*$, electric constants ($R_1$ and $R_2'$) of the induction motor 1, and a d-axis secondary magnetic flux command value $\varphi_{2d}^*$ of a d-axis current/magnetic flux command setting unit 13.

A slip frequency calculation unit 11 outputs a slip frequency command value $\omega_s^*$ of the induction motor 1 on the basis of a d-axis current command value $I_d^*$, a q-axis current command value $I_q^*$ and a set value $T_2^*$ of a secondary time constant that is output of the d-axis current-flux command setting unit 13.

An adding unit 12 outputs an output frequency value $\omega_1^*$ that is an added value of the speed estimated value $\omega_r^{\wedge}$ and the slip frequency command value $\omega_s^*$.

The d-axis current/magnetic flux command setting unit 13 outputs a d-axis current command value $I_d^*$, the d-axis secondary magnetic flux command value $\varphi_{2d}^*$, and the set value $T_2^*$ of the secondary time constant from the table of the mutual inductance M and the excitation current that has been created in the second embodiment.

A speed control calculation unit 14 outputs a q-axis current command value $I_q^*$ from a deviation between the speed command value $\omega_r^*$ and the speed estimated value $\omega_r^{\wedge}$ $(\omega_r^* - \omega_r^{\wedge})$.

A vector control calculation unit 15 outputs a d-axis voltage reference value $V_{dc}^{**}$ and a q-axis voltage reference value $V_{qc}^{**}$ on the basis of electric constants ($R_1$ and $L_\sigma$) of the induction motor 1, the d-axis secondary magnetic flux command value $\varphi_{2d}^*$ and the current command values $I_d^*$ and $I_q^*$ that are output of the d-axis current/magnetic flux command setting unit 13, and the output frequency value $\omega_1^*$.

A d-axis current control calculation unit 16 outputs a d-axis voltage correction value $\Delta V_d^*$ from a deviation ($I_d^* - I_{dc}$) between the d-axis current command value $I_d^*$ and the d-axis current detection value $I_{dc}$.

A q-axis current control calculation unit 17 outputs a q-axis voltage correction value $\Delta V_q^*$ from a deviation ($I_q^* - I_{qc}$) between the q-axis current command value $I_q^*$ and the q-axis current detection value $I_{qc}$.

An adding unit 18 outputs a voltage command value $V_{dc}^{***}$ that is an added value of the d-axis voltage reference value $V_{dc}^{**}$ and the d-axis voltage correction value $\Delta V_d^*$.

An adding unit 19 outputs a voltage command value $V_{qc}^{***}$ that is an added value of the q-axis voltage reference value $V_{qc}^{**}$ and the q-axis voltage correction value $\Delta V_q^*$.

First, there will be described the basic operation of a speed sensorless control method in a case where the d-axis current/magnetic flux command setting unit 13 (embodiment 2) that is a feature of the present embodiment is not used.

The d-axis current/magnetic flux command setting unit 13 (conventional) outputs the current command value $I_d^*$ necessary for generating the d-axis secondary magnetic flux value $\varphi_{2d}$ of the induction motor 1 (uses an excitation current value and a mutual inductance M that are measured at a normal V/f ratio).

Furthermore, the speed control calculation unit 14 calculates the q-axis current command value $I_q^*$ so that the speed estimated value $\omega_r{}^{\wedge}$ matches or approaches the speed command value $\omega_r^*$.

The vector control calculation unit 15 calculates the voltage reference values $V_{dc}{}^{**}$ and $V_{qc}{}^{**}$ illustrated in (Equation 6) using the d-axis current command value $I_d^*$, the q-axis current command value $I_q^*$, electric constants ($R_1$, $L_\sigma$, M, and L2) of the induction motor 1, the d-axis secondary magnetic flux command value $\varphi_{2d}^*$, and the output frequency value $\omega_1^*$.

[Equation 6]

$$\begin{bmatrix} V_{dc}{}^{**} = R_1 \cdot I_d^* - \omega_1^* \cdot L_\sigma \cdot \dfrac{1}{1+T_{ACR}\cdot s} I_q^* \\[4mm] V_{qc}{}^{**} = R_1 \cdot I_q^* + \omega_1^* \cdot L_\sigma \cdot \dfrac{1}{1+T_{ACR}\cdot s} I_d^* + \omega_1^* \cdot \dfrac{M}{L_2} \cdot \phi_{2d}^* \end{bmatrix} \qquad \cdots \ (6)$$

Here, $T_{ACR}$ represents a current control delay time constant.

In the d-axis current control calculation unit 16, the d-axis current command value $I_d^*$ and the d-axis current detection value $I_{dc}$ are input. In the q-axis current control calculation unit 17, the q-axis current command value $I_q^*$ and the q-axis current detection value $I_{qc}$ are input.

Herein, (proportional and integral) calculations are performed so that the current detection values $I_{dc}$ and $I_{qc}$ of respective components follow the current command values $I_d^*$ and $I_q^*$ according to (Equation 7), and the d-axis value $\Delta V_d^*$ and the q-axis voltage correction $\Delta V_q^*$ are output.

[Equation 7]

$$\begin{bmatrix} \Delta V_d^* = (K_{pdACR} + \dfrac{K_{idACR}}{s})(I_d^* - I_{dc}) \\[4mm] \Delta V_q^* = (K_{pqACR} + \dfrac{K_{iqACR}}{s})(I_q^* - I_{qc}) \end{bmatrix} \qquad \cdots \ (7)$$

Here, $K_{pdACR}$ represents a proportional gain of d-axis current control, $K_{idACR}$ represents an integral gain of the d-axis current control, $K_{pqACR}$ represents a proportional gain of the q-axis current control, and $K_{iqACR}$ represents an integral gain of the q-axis current control.

Furthermore, the adding units 18 and 19 calculate voltage command values $V_{dc}{}^{**}$ and $V_{qc}{}^{**}$ illustrated in (Equation 8), and control an output voltage of a power converter 2.

[Equation 8]

$$\begin{bmatrix} V_{dc}{}^{***} = V_{dc}{}^{**} + \Delta V_d^* \\[3mm] V_{qc}{}^{***} = V_{qc}{}^{**} + \Delta V_q^* \end{bmatrix} \qquad \cdots \ (8)$$

Furthermore, the speed estimation calculation unit 10 estimates a speed of the induction motor 1 according to (Equation 9). In this speed estimation calculation, the speed estimated value $\omega_r{}^{\wedge}$ is calculated by estimating a q-axis induced voltage value by a disturbance observer and dividing by a magnetic flux coefficient.

[Equation 9]

$$\omega_r{}^{\wedge} = \dfrac{1}{1+T_{obs}\cdot s} \left[ \dfrac{V_{qc}{}^{***} - \omega_1^{**} \cdot L_\sigma \cdot \dfrac{1}{1+T_{ACR}\cdot s} I_d^* - \left[ (R_1 + R_2') + L_\sigma \cdot s \right] \cdot I_{qc}}{\dfrac{M}{L_2}\phi_{2d}^*} \right] \qquad \cdots \ (9)$$

Here, $R_2'$ represents a primary side converted value of a secondary resistance value, $T_{obs}$ represents a speed estimated delay time constant set for the disturbance observer.

Furthermore, the slip frequency calculation unit 11 calculates the slip frequency command value $\omega_s^*$ of the induction motor 1 according to (Equation 10).

[Equation 10]

$$\omega_s^* = \frac{1}{T_2 \cdot I_d^*} \cdot \frac{1}{1+T_{ACR} \cdot s} I_q^* \qquad \cdots (10)$$

Here, $T_2^*$ represents a set value of the secondary time constant.

Furthermore, the adding unit 12 calculates the output frequency value $\omega_1^*$ illustrated in (Equation 11) using the speed estimated value $\omega_r^{\wedge}$ and the slip frequency command value $\omega_s^*$.

[Equation 11]

$$\omega_1^* = \omega_r^{\wedge} + \omega_s^* \quad ... \quad (11)$$

A phase estimation calculation unit 8 estimates a phase $\theta_{dc}$ of the magnetic flux axis of the induction motor 1 according to (Equation 12).

[Equation 12]

$$\theta_{dc} = \frac{1}{s} \cdot \omega_1^* \qquad \cdots (12)$$

A sensorless control calculation is executed using, as a control reference, the phase estimated value $\theta_{dc}$ that is an estimated value of the phase $\theta_d$ of the magnetic flux axis.

The above is the basic operation.

There will be now described control characteristics in a case where the d-axis current/magnetic flux command setting unit 13 (second embodiment) that is a feature of the present embodiment is used.

In order to describe effects of the d-axis current/magnetic flux command setting unit 13, first, there will be described control characteristics in a case where the d-axis current command value $I_d^*$ and the secondary magnetic flux command value $\varphi_{2d}^*$ are set to normal values (the excitation current value and the mutual inductance M that are measured at the normal V/f ratio).

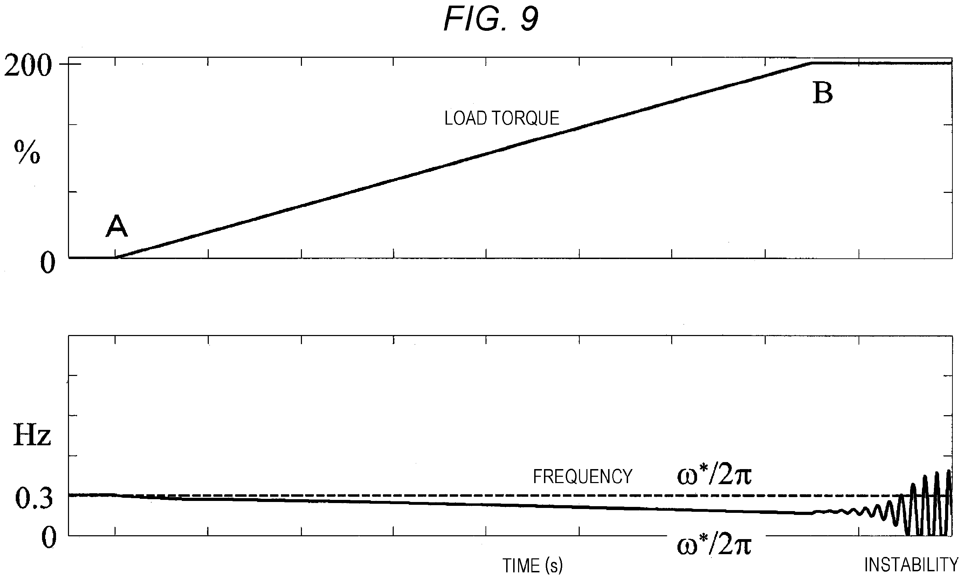

FIG. 9 illustrates load operation characteristics (simulation result) in a case where an error of 10% or more is given to a resistance value set for the sensorless control.

In a state where the speed control of the induction motor 1 is performed at 0.3 Hz (1/100 of a base frequency), load torque in a ramp form is given up to 200% from a point A to a point B. An actual speed value $\omega_r$ become lower than the speed command value $\omega_r^*$, and the speed deviation $\Delta\omega_r$ increases and becomes unstable after the point B illustrated in the figures . That is, there is a problem that the speed control characteristics deteriorate in an extremely low speed range.

Herein, with the d-axis current/magnetic flux command setting unit 13 (second embodiment) that is a feature of the present embodiment is used, this speed control characteristics can be improved. This will be described below.

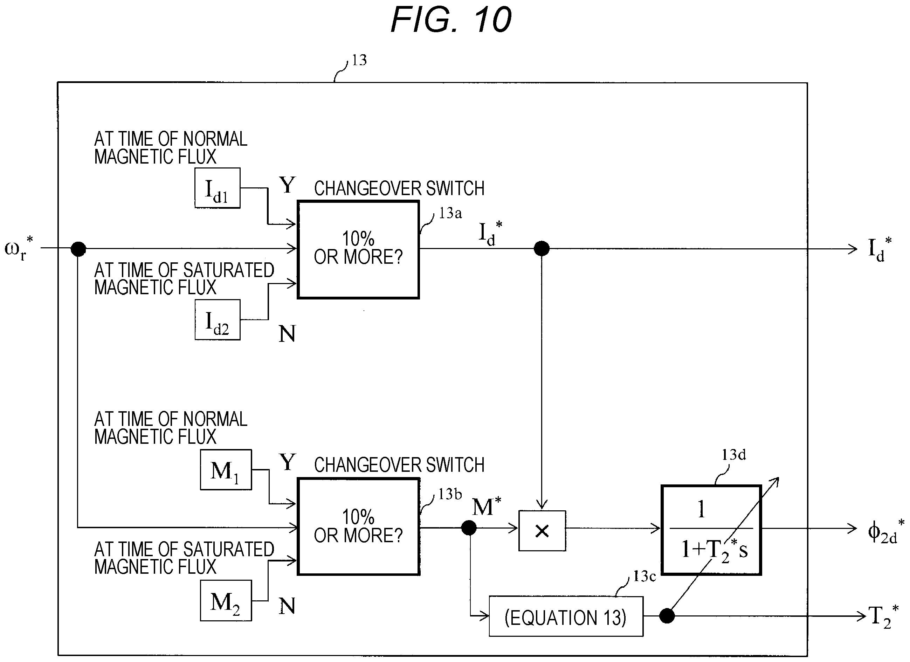

FIG. 10 illustrates a block of the d-axis current/magnetic flux command setting unit 13 (utilizing the second embodiment) according to the embodiment.

Basically, in accordance with the magnitude of the speed command value $\omega_r^*$, the d-axis current/magnetic flux command setting unit 13 (1) switches and outputs the d-axis current command value $I_d^*$ and the secondary magnetic flux command value $\varphi_{2d}^*$, and (2) switches and outputs the set value $T_2^*$ of the secondary time constant.

Specifically, a changeover switch 13a for the d-axis current command value $I_d^*$ selects $I_{d2}$ at the time of saturated magnetic flux in a case where the speed command value $\omega_r^*$ is less than 10% of the base frequency, and selects $I_{d1}$ at the time of normal magnetic flux in a case where the speed command value $\omega_r^*$ is 10% or more of the base frequency.

These values are outputted as the d-axis current command value $I_d^*$.

A changeover switch 13b for the secondary magnetic flux command value $\varphi_{2d}^*$ selects $M_2$ at the time of saturated magnetic flux in a case where the speed command value $\omega_r^*$ is 10% or more of the base frequency, and selects $M_1$ at the time of normal magnetic flux in a case where the speed command value $\omega_r^*$ is 10% or more of the base frequency.

These values are outputted as a set value M* of the mutual inductance.

Furthermore, the mutual inductance set value M* is multiplied by the d-axis current command value $I_d^*$, passed through a low-pass filter 13d having a gain of the secondary time constant set value $T_2^*$ of the induction motor 1, and then outputted as the secondary magnetic flux command value $\varphi_{2d}^*$.

Furthermore, the set value $M^*$ of the mutual inductance is input to a block 13c and converted by (Equation 13), and the set value $T_2^*$ of the secondary time constant is output.

[Equation 13]

$$T_2^* = \frac{\hat{M} + L_\sigma/2}{R_2} \qquad \cdots (13)$$

In the present embodiment, the switching level value of the changeover switches 13a and 13b is set to 10% of the base frequency, but may be 5% or 20%, and may be arbitrarily set.

Herein, constants ($I_{d1}$, $I_{d2}$, $M_1$, and $M_2$) to be set internally in FIG. 10 are set by selecting from the mutual inductance and excitation current table in the second embodiment.

For example, the excitation current value and the mutual inductance value at the time of normal magnetic flux (measuring at the normal V/f ratio) may be set as $I_{d1}$ and $M_1$, respectively, and the excitation current value and the mutual inductance value at the time of magnetic flux saturation may be set as $I_{d2}$ and $M_2$, respectively.

For example, in the characteristics of the excitation current and the mutual inductance illustrated in FIG. 7, data ($I_{d1}$, $M_1$) of (1) is selected at the time of normal magnetic flux, and data ($I_{d2}$, $M_2$) of (4) at the time of saturated magnetic flux. That is, by driving with the magnetic flux saturation region (using the data in (4)) in the low speed range, a speed control system is stabilized by minimizing an error in speed estimation related to flux fluctuations.

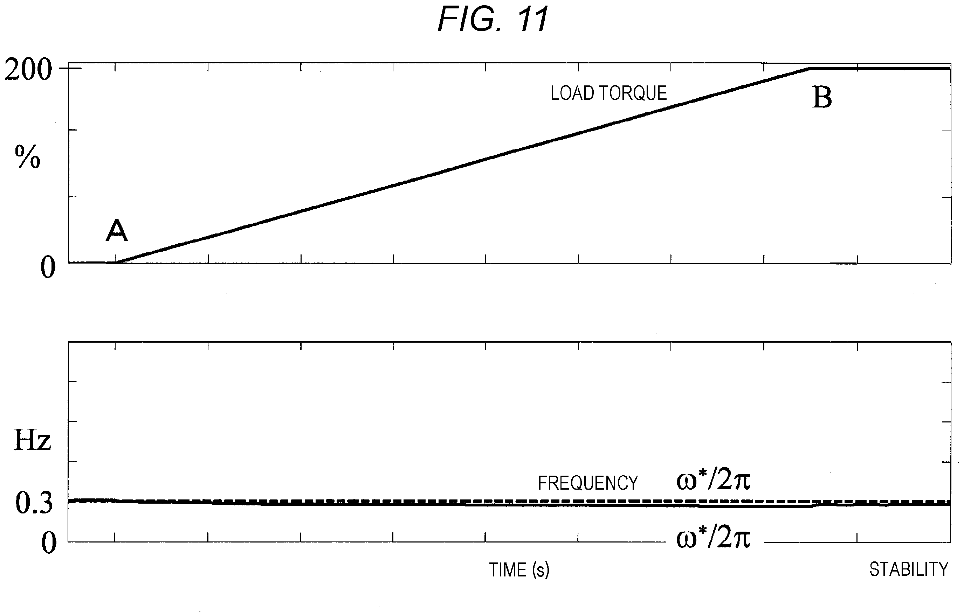

FIG. 11 illustrates a simulation result of the load operation characteristics according to the present embodiment. In this figure, a load condition used in FIG. 9 is set. A comparison between the results of the load characteristics disclosed in FIGS. 9 and 11 shows that in the case of control using the d-axis current/magnetic flux command setting unit 13 that is a feature of the present embodiment, a steady speed deviation of the actual speed value $\omega_r$ of the induction motor 1 decreases and the speed control system is stable.

By using the d-axis current/magnetic flux command setting unit 13 of the present embodiment, it is possible to stably achieve high torque even in an extremely low speed range.

[Fourth embodiment]

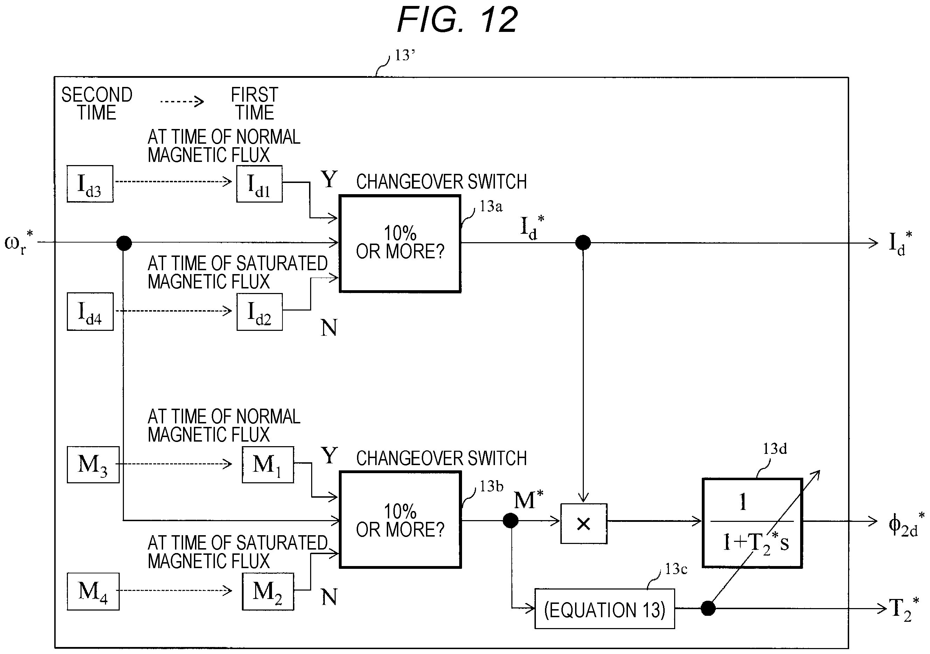

FIG. 12 is a configuration diagram of a d-axis current/magnetic flux command setting unit 13 according to the fourth embodiment of the present invention.

In the third embodiment, as for the d-axis current command value $I_d^*$ and the mutual inductance $M^*$ that are set in the d-axis current/magnetic flux command setting unit 13, one set of ($I_{d1}$, $M_1$) at the time of normal magnetic flux and ($I_{d2}$, $M_2$) at the time of saturated magnetic flux is set. However, in the present embodiment, two sets, each of which includes data at the time of normal magnetic flux and data at the time of saturated magnetic flux are set.

In the figure, reference numerals 13a to 13d are the same as those in FIG. 10.

The d-axis current/magnetic flux command setting unit 13' sets a total of two sets, each of which includes data at the time of normal magnetic flux and data at the time of saturated magnetic flux are set, that is, one set of ($I_{d1}$, $M_1$) at the time of normal magnetic flux and ($I_{d2}$, $M_2$) at the time of saturated magnetic flux and one set of ($I_{d3}$, $M_3$) at the time of normal magnetic flux and ($I_{d4}$, $M_4$) at the time of saturated magnetic flux.

For example, as the first set, the data of (1) in FIG. 7 is set at the time of normal magnetic flux and the data of (4) in FIG. 7 is set at the time of saturated magnetic flux. As the second set, the data of (2) in FIG. 7 is set at the time of normal magnetic flux and the data in (5) in FIG. 7 is set at the time of saturated magnetic flux. Thus, two sets of the excitation current values and the mutual inductance values are set.

The d-axis current/magnetic flux command setting unit 13' initially sets the first set and performs actual operation. In a case where a torque shortage state or an overcurrent trip occurs as a result of the actual operation, the d-axis current/magnetic flux command setting unit 13' automatically changes the setting to the second set.

With such a configuration, it is possible to set an optimum d-axis current command value $I_d^*$ and an optimum secondary magnetic flux command value $\varphi_{2d}^*$.

Furthermore, in the present embodiment, description has been given of a method of controlling the d-axis current/magnetic flux command setting unit 13' using two sets of set values that are the first set values and the second set values. However, the setting may be changed using three or more set values.

According to the present embodiment, a plurality of d-axis current command values $I_d^*$ and a plurality of secondary magnetic flux command values $\varphi_{2d}^*$ are provided. With this configuration, it is possible to achieve stable and highly accurate speed control in any load torque state (magnitude and inclination of torque).

[Fifth embodiment]

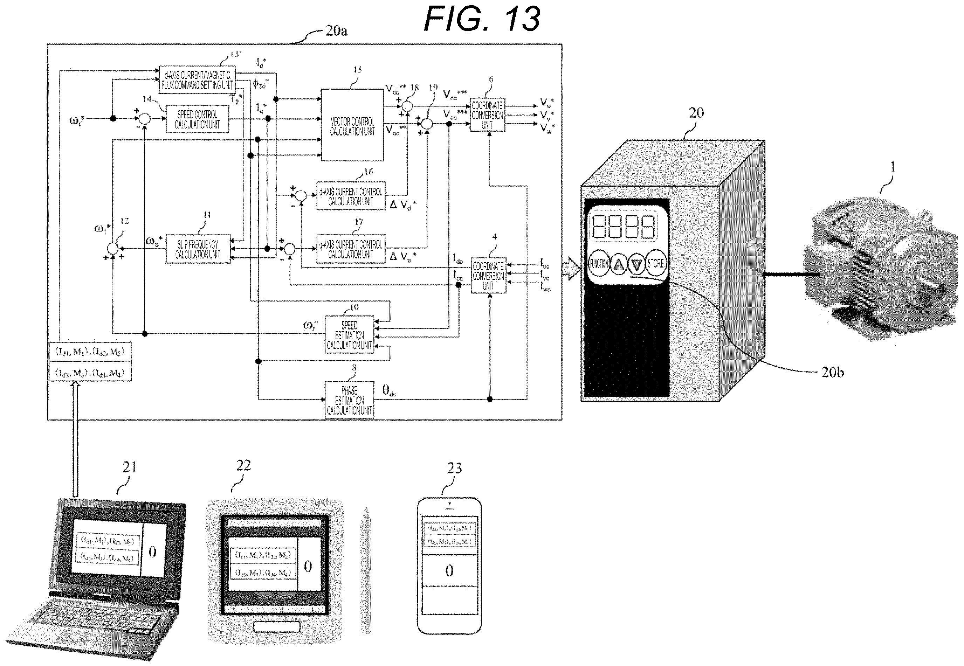

FIG. 13 is a configuration diagram of a power converter according to a fifth embodiment of the present invention.

The present embodiment is obtained by applying the fourth embodiment to a drive system of an induction motor.

In the figure, reference numerals 1 to 4, 6, 8, 10 to 13', and 14 to 19 of the constituent elements are the same as those in FIGS. 8 and 12.

An induction motor 1 that is a component in FIG. 13 is driven by the power conversion apparatus 20. In the power conversion apparatus 20, reference numerals 4, 6, 8, 10 to 13', and 14 to 19 in FIGS. 8 and 12 are implemented as software, and reference numerals 2 and 2a are implemented as hardware.

Values of a d-axis current command value $I_d{}^*$ and a secondary magnetic flux command value $\varphi_{2d}{}^*$ ($I_{d1}$, $M_1$), ($I_{d2}$, $M_2$), ($I_{d3}$, $M_3$), and ($I_{d4}$, $M_4$)) may be made settable by a host device such as a digital operator 20b, a personal computer 21, a tablet 22 and a smartphone 23 of the power conversion apparatus 20.

With a driving system of an induction motor of the present embodiment, it is possible to achieve high-speed control characteristics.

In the third to fifth embodiments so far, the voltage correction values $\Delta V_d{}^*$ and $\Delta V_q{}^*$ has been created from the current command values $I_d{}^*$ and $I_q{}^*$ and the current detection values $I_{dc}$ and $I_{qc}$, and a calculation that adds the voltage correction value and the voltage reference value of the vector control, illustrated in (Equation 8), has been performed. However, there can be applied a control method in which intermediate current command values $I_d{}^*$ and $I_q{}^*$ illustrated in (Equation 14) used for a vector control calculation are created from current command values $I_d{}^*$ and $I_q{}^*$ and current detection values $I_{dc}$ and $I_{qc}$, and voltage command values $V_{dc}{}^{****}$ and $V_{qc}{}^{****}$ are calculated using these current command values and the output frequency value $\omega_1{}^*$, and the electric constant of the induction motor 1, according to (Equation 15).

[Equation 14]

$$
\begin{bmatrix}
Id^{**} = \left(K_{pdACR1} + \dfrac{K_{idACR1}}{s}\right)(Id^{*} - I_{dc}) \\[3mm]
Iq^{**} = \left(K_{pqACR1} + \dfrac{K_{iqACR1}}{s}\right)(Iq^{*} - I_{qc})
\end{bmatrix}
\qquad \cdots (14)
$$

Here, $K_{pdACR1}$ represents a proportional gain of the d-axis current control, $K_{idACR1}$ represents an integral gain of the d-axis current control, $K_{pqACR1}$ represents a proportional gain of the q-axis current control, and $K_{iqACR1}$ represents an integral gain of the q-axis current control.

[Equation 15]

$$
\begin{bmatrix}
V_{dc}{}^{****} = R_1 \cdot Id^{**} - \omega_1{}^{*} \cdot L\sigma \cdot \dfrac{1}{1+T_d \cdot s} Iq^{**} \\[4mm]
V_{qc}{}^{****} = R_1 \cdot Iq^{**} + \omega_1{}^{*} \cdot L\sigma \cdot \dfrac{1}{1+T_q \cdot s} Iq^{**} + \omega_1{}^{*} \cdot \dfrac{M}{L_2} \cdot \phi_{2d}{}^{*}
\end{bmatrix}
\qquad \cdots (15)
$$

Here, $T_d$ represents a d-axis electric time constant ($L_d/R$), $T_q$ represents a q- axis electric time constant ($L_q/R$).

Furthermore, there can be applied a vector control method in which a voltage correction value $\Delta V_{d\_p}{}^*$ of a d-axis proportional calculation component, a voltage correction value $\Delta V_{d\_i}{}^*$ of a d-axis integral calculation g component, a voltage correction value $\Delta V_{q\_p}{}^*$ of a q-axis proportional calculation component, and a voltage correction value $\Delta V_{q\_i}{}^*$ of a q-axis integral calculation component that are used for a vector control calculation are calculated from current command values $I_d{}^*$ and $I_q{}^*$ and current detection values $I_{dc}$ and $I_{qc}$, according to (Equation 16), and

[Equation 16]

$$\begin{bmatrix} \Delta V_{d\_p}{}^* = K_{pdACR}(I_d{}^* - I_{dc}) \\ \Delta V_{d\_i}{}^* = \dfrac{K_{idACR}}{s}(I_d{}^* - I_{dc}) \\ \Delta V_{q\_p}{}^* = K_{pqACR}(I_q{}^* - I_{qc}) \\ \Delta V_{q\_i}{}^* = \dfrac{K_{iqACR}}{s}(I_q{}^* - I_{qc}) \end{bmatrix} \qquad \cdots (16)$$

voltage command values $V_{dc}{}^{*****}$ and $V_{qc}{}^{*****}$ are calculated using these voltage correction values, output frequency value $\omega_1{}^*$ and the electric constants of the induction motor 1, according to (Equation 17).

[Equation 17]

$$\begin{bmatrix} V_{dc}{}^{*****} = (\Delta V_{d\_p}{}^* + \Delta V_{d\_i}{}^*) - \omega 1^* \cdot \dfrac{L\sigma}{R_1} \cdot \Delta V_{q\_i}{}^* \\ V_{dc}{}^{*****} = (\Delta V_{q\_p}{}^* + \Delta V_{q\_i}{}^*) + \omega 1^* \cdot \dfrac{L\sigma}{R_1} \cdot \Delta V_{d\_i}{}^* + \omega 1^* \cdot \dfrac{M}{L2} \cdot \phi 2d^* \end{bmatrix} \qquad \cdots (17)$$

Furthermore, there can be also applied a control method in which an output frequency command value $\omega_1{}^{**}$ illustrated in (Equation 18) and voltage command values $V_{dc}{}^{******}$ and $V_{qc}{}^{******}$ illustrated in (Equation 19) are calculated using the d-axis current command value $I_d{}^*$ and a primary delay signal $I_{qctd}$ of the q-axis current detection value $I_{qc}$, the speed command value $\omega_r{}^*$, and electrical constants of the induction motor 1.

[Equation 18]

$$\omega 1^{**} = \omega r^* + \dfrac{1}{T2^* \cdot I_d{}^*} \cdot I_{qc} \qquad \cdots (18)$$

[Equation 19]

$$\begin{bmatrix} V_{dc}{}^{******} = R_1 \cdot I_d{}^* - \omega 1^{**} \cdot L_\sigma \cdot I_{qctd} \\ V_{qc}{}^{******} = R_1 \cdot I_d{}^* + \omega 1^{**} \cdot L_\sigma \cdot I_d{}^* + \omega 1^{**} \cdot \dfrac{M}{L2} \cdot \phi 2d^* \end{bmatrix} \qquad \cdots (19)$$

Furthermore, in the third to fifth embodiments so far, the speed estimation calculation unit 10 has calculated the speed estimated value according to (Equation 9). However, a method of using both the current control and the speed estimation in the q-axis current control may be adopted.

In this case, the speed estimated value $\omega_r{}^{\wedge\wedge}$ is calculated as illustrated in (Equation 20).

[Equation 20]

$$\omega r^{\wedge\wedge} = (K_{pqACR2} + \dfrac{K_{iqACR2}}{s})(I_q{}^* - I_{qc}) \qquad \cdots (20)$$

Here, $K_{pqACR2}$ represents a proportional gain of current control, and $K_{iqACR2}$ represents an integral gain of current control.

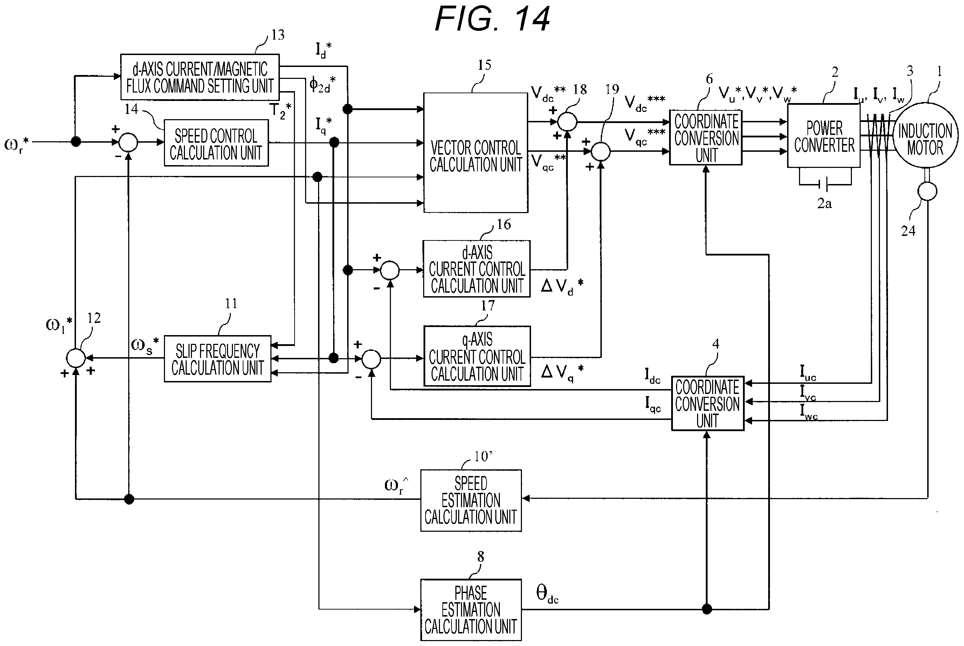

Furthermore, in the third to fifth embodiments so far, the speed estimation calculation unit 10 has calculated the speed estimated value according to (Equation 9). However, there may be adopted a method in which as disclosed in FIG. 14, a speed detection encoder 24 is attached to the induction motor 1, and a speed detection value is calculated from an encoder signal.

In the case of FIG. 14, the speed detection encoder 24 is attached to the induction motor 1, and a speed detection calculation unit 10' is provided in place of the speed estimation calculation unit 10 disclosed in the third embodiment. With this configuration, it is possible to accurately detect an actual speed value (speed detection value) $\omega_{rd}$ of the induction motor 1.

[Sixth embodiment]

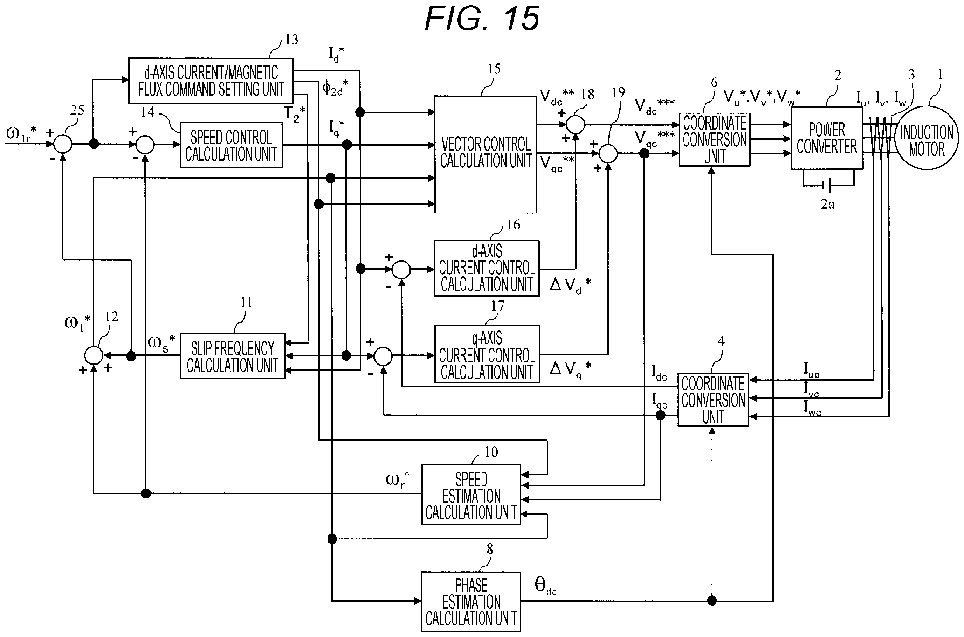

FIG. 15 is a configuration diagram of a power conversion apparatus according to a sixth embodiment of the present invention.

A difference from the third embodiment is that an output frequency $\omega_{1r}$* instead of a speed command value $\omega_r$* is given as a command value from a host device. A subtracting unit 25 subtracts a slip frequency command value $\omega_s$* from the output frequency command value $\omega_{1r}$* and outputs the speed command value $\omega_r$*.

As disclosed in FIG. 14, there may be adopted a method in which a speed detection calculation unit 10' is provided instead of the speed estimation calculation unit 10, whereby a speed detection value $\omega_{rd}$ is calculated as an alternative to the speed estimated value $\omega_r$^ of the induction motor 1.

[Seventh embodiment]

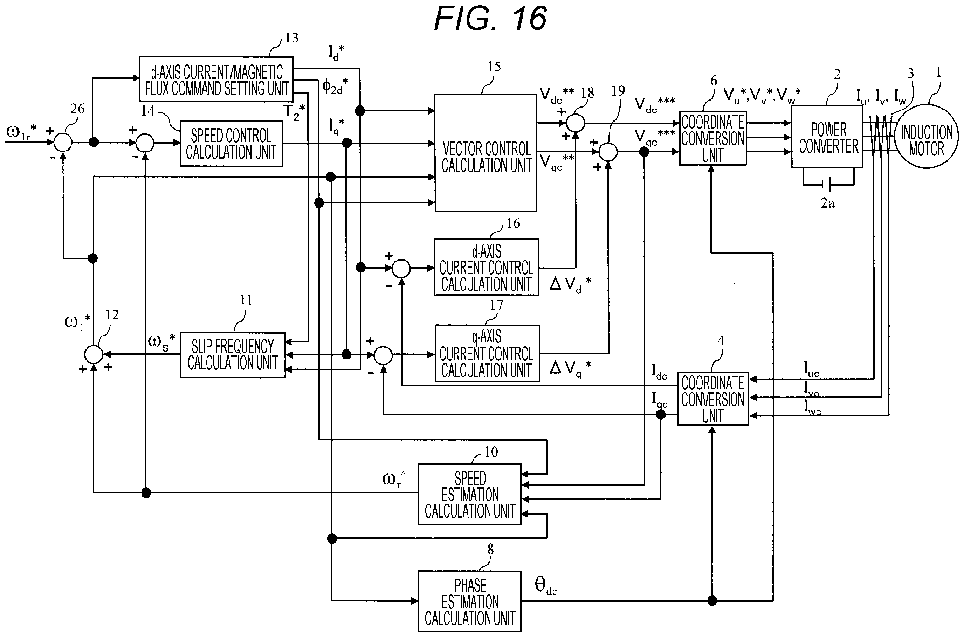

FIG. 16 is a configuration diagram of a power conversion apparatus according to a seventh embodiment of the present invention.

A difference from the third embodiment is that an output frequency $\omega_{1r}$* instead of a speed command value $\omega_r$* is given as a command value from a host device, the output frequency value $\omega_1$* is subtracted from the output frequency command value $\omega_{1r}$* by a subtracting unit 26, and a resultant output frequency value is used as an input signal to the speed control calculation unit.

As disclosed in FIG. 14, there may be adopted a method in which a speed detection calculation unit 10' is provided instead of the speed estimation calculation unit 10, whereby a speed detection value $\omega_{rd}$ is calculated as an alternative to the speed estimated value $\omega_r$^ of the induction motor 1.

Industrial Applicability

According to a power conversion apparatus of the present invention, it is possible to stably output high torque even in an extremely low speed range. Therefore, the power conversion apparatus can be used not only for driving of general induction motors, but also for elevator drive motors, in-vehicle drive motors (for construction machinery), motors for hoist cranes, and the like.

Reference Signs List

| | |
|---|---|
| 1 | induction motor |
| 2 | power converter |
| 2a | direct current power supply |
| 3 | current detector |
| 4 | coordinate conversion unit |
| 5, 5' | V/f control unit |
| 6 | coordinate conversion unit |
| 7 | mutual inductance calculation unit |
| 7a | reactive power calculation unit |
| 7b | mutual inductance estimation unit |
| 8 | phase estimation calculation unit |
| 9 | mutual inductance/excitation current table unit |
| 10 | speed estimation calculation unit |
| 11 | slip frequency calculation unit |
| 12 | adding unit |
| 13 | d-axis current/magnetic flux command setting unit |
| 14 | speed control calculation unit |
| 15 | vector control calculation unit |
| 16 | d-axis current control calculation unit |
| 17 | q-axis current control calculation unit |
| 18, 19 | unit |

| 20 | power conversion apparatus |
| 20a | contents of power conversion apparatus |
| 20b | panel part of power conversion apparatus |
| 21 | personal computer |
| 22 | tablet |
| 23 | smartphone |
| 24 | speed detection encoder |
| 25, 26 | subtracting unit |
| $M^\wedge$ | mutual inductance estimated value |
| $Q^\wedge$ | reactive power estimated value |
| $I_d{}^*$ | d-axis current command value |
| $I_q{}^*$ | q-axis current command value |
| $\omega_r$ | speed of induction motor 1 |
| $\omega_r{}^\wedge$ | speed estimated value |
| $\omega_{rd}$ | speed detection value |
| $\omega_s$ | slip of induction motor 1 |
| $\omega_s{}^*$ | slip frequency command value |
| $\omega_{1r}{}^*$ | output frequency command value |
| $\omega_{1r}$ | output frequency value |
| $\omega_1{}^*$ | output frequency value of induction motor 1 |
| $\theta_{dc}$ | phase estimated value |
| $\omega_r{}^*$ | speed command value |
| $V_{dc}{}^*$ | reference value of d-axis voltage command |
| $V_{qc}{}^*$ | reference value of q-axis voltage command |
| $V_{dc}{}^{**}$, $V_{dc}{}^{***}$, $V_{dc}{}^{****}$, $V_{dc}{}^{*****}$ | d-axis voltage command value |
| $V_{qc}{}^{**}$, $V_{qc}{}^{***}$, $V_{qc}{}^{****}$, $V_{qc}{}^{*****}$ | q-axis voltage command value |

## Claims

1. A method of automatically tuning a power conversion apparatus (20) that drives an induction motor (1), the method comprising:

   in an auto tuning mode,
   a step in which a V/f control unit (5, 5') that outputs a voltage command value of the induction motor (1) changes a ratio of an output voltage of the induction motor (1) to an output frequency of the induction motor (1) to change a voltage command value over several stages; and
   a step in which a current detection means (3) detects an excitation current that changes in several stages;
   **characterized in that** the method further comprises,

   in the auto tuning mode:

   a step in which a mutual inductance calculation unit (7) calculates reactive power on the basis of the voltage command value, a current detection value, and a speed command value and estimates, from the reactive power, a mutual inductance of the induction motor (1) that changes in several stages; and
   wherein the method further comprises:

   in a vector control mode,
   a step in which a magnetic flux axis current/magnetic flux command setting unit (13) outputs a current command value and a secondary magnetic flux command value on the basis of a mutual inductance value and an excitation current value measured in the auto tuning mode; and
   a step in which a vector control calculation unit (15) outputs a voltage command value of the induction motor (1) on the basis of the current command value and the secondary magnetic flux command value,

   wherein in the step of outputting the current command value and the secondary magnetic flux command value, the magnetic flux axis current/magnetic flux command setting unit (13) sets a mutual inductance value in a saturated state and an excitation current value at that time in a low speed range and sets a mutual inductance value in a normal state and an excitation current value at that time in a middle and high speed range.

**2.** The method of automatically tuning a power conversion apparatus (20) according to claim 1, wherein in the step of outputting the current command value and the secondary magnetic flux command value, the magnetic flux axis current/magnetic flux command setting unit (13) is capable of setting two or more excitation current values and two or more mutual inductance values in at least either the low speed range or the middle and high speed range, and in a case where a torque shortage state or an overcurrent trip state occurs due to the first set value, the magnetic flux axis current/magnetic flux command setting unit (13) changes the setting to the next set value.

**3.** A power conversion apparatus (20) that drives an induction motor (1) by vector control, **characterised by** comprising:

a magnetic flux axis current/magnetic flux command setting unit (13) that is configured to output a current command value and a secondary magnetic flux command value on the basis of a set mutual inductance value and a set excitation current value;

a vector control calculation unit (15) that is configured to output a voltage command value of the induction motor (1) on the basis of the current command value and the secondary magnetic flux command value;

wherein in a vector control mode, the magnetic flux axis current/magnetic flux command setting unit (13) is configured to set a mutual inductance value in a saturated state and an excitation current value at that time in the low speed range, and sets a mutual inductance value in a normal state and an excitation current value at that time in a middle and high speed range.

**4.** The power conversion apparatus (20) according to claim 3, wherein the saturated state means that an excitation current of the induction motor (1) is equal to or higher than a rated excitation current value, and

the normal state means a state represented with an excitation current value measured at a ratio of a voltage to a frequency at the time of driving by V/f control, the ratio of the voltage to the frequency being calculated using a base value of the frequency.

**5.** The power conversion apparatus (20) according to claim 3, wherein the low speed range means that a speed command value or a frequency command value is less than a predetermined ratio of a base value, and the middle and high speed range means that the speed command value or the frequency command value is equal to or greater than the predetermined ratio of the base value.

**6.** The power conversion apparatus (20) according to any one of claims 3 to 5, wherein the mutual inductance value to be set and the excitation current value to be set are set on the basis of a mutual inductance/excitation current table unit.

**7.** The power conversion apparatus (20) according to any one of claims 3 to 5, the mutual inductance value to be set or the excitation current value to be set is set in a microcomputer internal memory mounted in the power conversion apparatus (20), and is made settable and changeable by connecting a digital operator, a personal computer, a tablet or a smartphone device.

**Patentansprüche**

**1.** Verfahren zum automatischen Abstimmen einer Leistungswandlervorrichtung (20), die einen Induktionsmotor (1) ansteuert, wobei das Verfahren Folgendes umfasst:

in einem automatischen Abstimmungsmodus,

einen Schritt, in dem eine Spannungs-Frequenz-Steuereinheit (5, 5'), die einen Spannungsbefehlswert des Induktionsmotors (1) ausgibt, ein Verhältnis einer Ausgangsspannung des Induktionsmotors (1) zu einer Ausgangsfrequenz des Induktionsmotors (1) ändert, um einen Spannungsbefehlswert in mehreren Schritten zu ändern; und

einen Schritt, in dem ein Stromdetektionsmittel (3) einen Anregungsstrom detektiert, der sich in mehreren Schritten ändert;

**dadurch gekennzeichnet, dass** das Verfahren ferner in dem automatischen Abstimmungsmodus Folgendes umfasst:

einen Schritt, in dem eine Gegeninduktivitätsberechnungseinheit (7) eine Blindleistung auf der Basis des Spannungsbefehlswerts, eines Stromdetektionswerts und eines Drehzahlbefehlswerts berechnet und aus der Blindleistung eine Gegeninduktivität des Induktionsmotors (1) berechnet, die sich in mehreren Schritten ändert; und

wobei das Verfahren ferner Folgendes umfasst:

in einem Vektorsteuermodus,

einen Schritt, in dem eine Magnetfluss-Achsenstrom-/Magnetfluss-Befehlseinstelleinheit (13) einen Strombefehlswert und einen Sekundär-Magnetflussbefehlswert auf der Basis eines Gegeninduktivitätswerts und eines Anregungsstromwerts ausgibt, der in dem automatischen Abstimmungsmodus gemessen wurde; und

einen Schritt, in dem eine Vektorsteuerberechnungseinheit (15) einen Spannungsbefehlswert des Induktionsmotors (1) auf der Basis des Strombefehlswerts und des Sekundär-Magnetflussbefehlswerts ausgibt,

wobei in dem Schritt des Ausgebens des Strombefehlswerts und des Sekundär-Magnetflussbefehlswerts die Magnetfluss-Achsenstrom-/Magnetfluss-Befehlseinstelleinheit (13) einen Gegeninduktionswert in einen gesättigten Zustand und einen Anregungsstromwert zu diesem Zeitpunkt in einen Bereich niedriger Drehzahl und einen Gegeninduktionswert in einen normalen Zustand und einen Anregungsstromwert zu diesem Zeitpunkt in einen Bereich mittlerer oder hoher Drehzahl einstellt.

2. Verfahren zum automatischen Abstimmen einer Leistungswandlervorrichtung (20) nach Anspruch 1,
wobei in dem Schritt des Ausgebens des Strombefehlswerts und des Sekundär-Magnetflussbefehlswerts die Magnetfluss-Achsenstrom-/Magnetfluss-Befehlseinstelleinheit (13) in der Lage ist, zwei oder mehr Anregungsstromwerte und zwei oder mehr Gegeninduktionswerte in zumindest entweder den Bereich niedriger Drehzahl oder den Bereich mittlerer und hoher Drehzahl einzustellen, und in einem Fall, wo ein Drehmomentmangelzustand oder ein Überstromauslösezustand aufgrund des ersten Einstellungswerts auftritt, die Magnetfluss-Achsenstrom-/Magnetfluss-Befehlseinstelleinheit (13) die Einstellungen auf den nächsten Einstellungswert ändert.

3. Leistungswandlervorrichtung (20), die einen Induktionsmotor (1) durch Vektorsteuerung antreibt, **dadurch gekennzeichnet, dass** sie Folgendes umfasst:

eine Magnetfluss-Achsenstrom-/Magnetfluss-Befehlseinstelleinheit (13), die so ausgelegt ist, dass sie einen Strombefehlswert und einen Sekundär-Magnetflussbefehlswert auf der Basis eines eingestellten Gegeninduktivitätswerts und eines eingestellten Anregungsstromwerts ausgibt;

eine Vektorsteuerberechnungseinheit (15), die so ausgelegt ist, dass sie einen Spannungsbefehlswert des Induktionsmotors (1) auf der Basis des Strombefehlswerts und des Sekundär-Magnetflussbefehlswerts ausgibt;

wobei die Magnetfluss-Achsenstrom-/Magnetfluss-Befehlseinstelleinheit (13) in einem Vektorsteuermodus so ausgelegt ist, dass sie einen Gegeninduktivitätswert in einen gesättigten Zustand und einen Anregungsstromwert zu diesem Zeitpunkt in dem Bereich niedriger Drehzahl einstellt, und einen Gegeninduktivitätswert in einem normalen Zustand einstellt und einen Anregungsstromwert zu diesem Zeitpunkt in einem Bereich mittlerer oder hoher Drehzahl einstellt.

4. Leistungswandlervorrichtung (20) nach Anspruch 3,
wobei der gesättigte Zustand sich darauf bezieht, dass ein Anregungsstrom des Induktionsmotors (1) gleich oder höher als ein bewerteter Anregungsstromwert ist, und
der normale Zustand sich auf einen Zustand bezieht, der durch einen Ausgangsstromwert dargestellt wird, der in einem Verhältnis einer Spannung zu einer Frequenz zu dem Zeitpunkt des Ansteuerns durch die Spannungs-Frequenz-Steuerung gemessen wurde, wobei das Verhältnis der Spannung zu der Frequenz unter Verwendung eines Basiswerts der Frequenz berechnet wird.

5. Leistungswandlervorrichtung (20) nach Anspruch 3,
wobei der Bereich niedriger Drehzahl sich darauf bezieht, dass ein Drehzahlbefehlswert oder ein Frequenzbefehlswert geringer als ein vorgegebenes Verhältnis eines Basiswerts ist, und der Bereich mittlerer oder hoher Drehzahl sich darauf bezieht, dass der Drehzahlbefehlswert oder der Frequenzbefehlswert gleich oder größer als das vorgegebene Verhältnis des Basiswerts ist.

6. Leistungswandlervorrichtung (20) nach einem der Ansprüche 3 bis 5,
wobei der einzustellende Gegeninduktivitätswert und der einzustellende Anregungsstromwert auf der Basis einer Gegeninduktivitäts-/Anregungsstrom-Tabelleneinheit eingestellt werden.

**7.** Leistungswandlervorrichtung (20) nach einem der Ansprüche 3 bis 5,
wobei der einzustellende Gegeninduktivitätswert und der einzustellende Anregungsstromwert in einem internen Mikrocomputerspeicher, der in der Leistungswandlervorrichtung (20) angebracht ist, eingestellt wird und durch Verbinden einer digitalen Bedieneinheit, eines Personalcomputers, eines Tablets oder eines Smartphones einstellbar und veränderbar gemacht wird.

**Revendications**

**1.** Procédé de syntonisation automatique d'un appareil de conversion de puissance (20) qui entraîne un moteur à induction (1), le procédé comprenant :

dans un mode de syntonisation automatique,
une étape dans laquelle une unité de commande de rapport tension/fréquence, V/f, (5, 5'), qui fournit en sortie une valeur d'instruction de tension du moteur à induction (1), modifie un rapport entre une tension de sortie du moteur à induction (1) et une fréquence de sortie du moteur à induction (1), en vue de modifier une valeur d'instruction de tension sur plusieurs étages ; et
une étape dans laquelle un moyen de détection de courant (3) détecte un courant d'excitation qui varie dans plusieurs étages ;
**caractérisé en ce que** le procédé comprend en outre,
en mode de syntonisation automatique :

une étape dans laquelle une unité de calcul d'inductance mutuelle (7) calcule une puissance réactive sur la base de la valeur d'instruction de tension, d'une valeur de détection de courant et d'une valeur d'instruction de vitesse, et estime, à partir de la puissance réactive, une inductance mutuelle du moteur à induction (1) qui varie dans plusieurs étages ; et
dans lequel le procédé comprend en outre :

dans un mode de commande vectorielle,
une étape dans laquelle une unité de définition d'instruction de flux magnétique / courant d'axe de flux magnétique (13) fournit en sortie une valeur d'instruction de courant et une valeur d'instruction de flux magnétique secondaire sur la base d'une valeur d'inductance mutuelle et d'une valeur de courant d'excitation mesurées en mode de syntonisation automatique ; et
une étape dans laquelle une unité de calcul de commande vectorielle (15) fournit en sortie une valeur d'instruction de tension du moteur à induction (1) sur la base de la valeur d'instruction de courant et de la valeur d'instruction de flux magnétique secondaire ;

dans lequel, dans l'étape de fourniture en sortie de la valeur d'instruction de courant et de la valeur d'instruction de flux magnétique secondaire, l'unité de définition d'instruction de flux magnétique / courant d'axe de flux magnétique (13) définit une valeur d'inductance mutuelle dans un état saturé et une valeur de courant d'excitation en cours dans une plage de vitesse faible, et définit une valeur d'inductance mutuelle dans un état normal et une valeur de courant d'excitation en cours dans une plage de vitesse moyenne et élevée.

**2.** Procédé de syntonisation automatique d'un appareil de conversion de puissance (20) selon la revendication 1, dans lequel, à l'étape de fourniture en sortie de la valeur d'instruction de courant et de la valeur d'instruction de flux magnétique secondaire, l'unité de définition d'instruction de flux magnétique / courant d'axe de flux magnétique (13) est en mesure de définir deux valeurs de courant d'excitation ou plus et deux valeurs d'inductance mutuelle ou plus, dans au moins, soit la plage de vitesse faible, soit la plage de vitesse moyenne et élevée, et dans un cas où un état de manque de couple ou un état de fonctionnement à surintensité se produit sous l'effet de la première valeur définie, l'unité de définition d'instruction de flux magnétique / courant d'axe de flux magnétique (13) modifie le réglage sur la valeur définie successive.

**3.** Appareil de conversion de puissance (20) qui entraîne un moteur à induction (1) par commande vectorielle, **caractérisé en ce qu'**il comprend :

une unité de définition d'instruction de flux magnétique / courant d'axe de flux magnétique (13) qui est configurée de manière à fournir en sortie une valeur d'instruction de courant et une valeur d'instruction de flux magnétique secondaire, sur la base d'une valeur d'inductance mutuelle et d'une valeur de courant d'excitation définie ;
une unité de calcul de commande vectorielle (15) configurée de manière à fournir en sortie une valeur d'instruction de tension du moteur à induction (1) sur la base de la valeur d'instruction de courant et de la valeur d'instruction de flux magnétique secondaire ;
dans lequel, dans un mode de commande vectorielle, l'unité de définition d'instruction de flux magnétique / courant d'axe de flux magnétique (13) est configurée de manière à définir une valeur d'inductance mutuelle dans un état saturé et une valeur de courant d'excitation en cours dans la plage de vitesse faible, et définit une valeur d'inductance mutuelle dans un état normal et une valeur de courant d'excitation en cours dans une plage de vitesse moyenne et élevée.

4. Appareil de conversion de puissance (20) selon la revendication 3,
dans lequel l'état saturé signifie qu'un courant d'excitation du moteur à induction (1) est égal ou supérieur à une valeur de courant d'excitation nominale ; et
l'état normal signifie un état représenté par une valeur de courant d'excitation mesurée selon un rapport entre une tension et une fréquence, au moment de l'entraînement, par le biais de la commande V/f, le rapport entre la tension et la fréquence étant calculé en utilisant une valeur de base de la fréquence.

5. Appareil de conversion de puissance (20) selon la revendication 3,
dans lequel la plage de vitesse faible signifie qu'une valeur d'instruction de vitesse ou une valeur d'instruction de fréquence est inférieure à un rapport prédéterminé d'une valeur de base, et dans lequel la plage de vitesse moyenne et élevée signifie que la valeur d'instruction de vitesse ou la valeur d'instruction de fréquence est égale ou supérieure au rapport prédéterminé de la valeur de base.

6. Appareil de conversion de puissance (20) selon l'une quelconque des revendications 3 à 5,
dans lequel la valeur d'inductance mutuelle devant être définie et la valeur de courant d'excitation devant être définie sont définies sur la base d'une unité de table d'inductance mutuelle/courant d'excitation.

7. Appareil de conversion de puissance (20) selon l'une quelconque des revendications 3 à 5,
dans lequel la valeur d'inductance mutuelle devant être définie ou la valeur de courant d'excitation devant être définie est définie dans une mémoire interne de micro-ordinateur montée dans l'appareil de conversion de puissance (20), et est rendue réglable et modifiable en connectant un opérateur numérique, un ordinateur personnel, une tablette ou un dispositif de téléphone intelligent.

# FIG. 1

EP 3 358 743 B1

*FIG. 2*

*FIG. 3*

EP 3 358 743 B1

## FIG. 4

# FIG. 5

5'a  EXAMPLE OF OUTPUT SIGNAL

EP 3 358 743 B1

## FIG. 6

EP 3 358 743 B1

# FIG. 7

FIG. 8

*FIG. 9*

EP 3 358 743 B1

## FIG. 10

EP 3 358 743 B1

## FIG. 11

EP 3 358 743 B1

# FIG. 12

EP 3 358 743 B1

FIG. 13

FIG. 14

EP 3 358 743 B1

# FIG. 15

EP 3 358 743 B1

FIG. 16

EP 3 358 743 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012098477 A1
- KR 20040087160 A

- JP H10285999 A